Europäisches Patentamt

**European Patent Office**

Office européen des brevets

(19)

(11) Numéro de publication: **0 192 505**
**B1**

(12) **FASCICULE DE BREVET EUROPEEN**

(45) Date de publication du fascicule du brevet: **07.11.90**

(21) Numéro de dépôt: **86400086.4**

(22) Date de dépôt: **16.01.86**

(51) Int. Cl.⁵: **F 16 C 7/00,** B 29 C 65/00, B 29 C 65/50

(54) **Procédé pour la solidarisation d'un élément à l'extrémité d'un tube de matériau composite et dispositif ainsi obtenu.**

(30) Priorité: **28.01.85 FR 8501130**

(43) Date de publication de la demande:
**27.08.86 Bulletin 86/35**

(45) Mention de la délivrance du brevet:
**07.11.90 Bulletin 90/45**

(84) Etats contractants désignés:
**BE DE GB IT NL SE**

(56) Documents cités:
**EP-A-0 046 869**
**EP-A-0 059 163**
**DE-A-2 756 969**
**DE-C- 606 989**
**FR-A-2 444 880**
**FR-A-2 531 158**
**US-A-4 236 386**

(73) Titulaire: **AEROSPATIALE Société Nationale Industrielle**
**37, Boulevard de Montmorency**
**F-75781 Paris Cédex 16 (FR)**

(72) Inventeur: **Aubry, Jacques**
**2 avenue Marie Gasquet**
**F-13480 Cabries (FR)**

(74) Mandataire: **Bonnetat, Christian et al**
**CABINET BONNETAT 23, Rue de Léningrad**
**F-75008 Paris (FR)**

Courier Press, Leamington Spa, England.

**Description**

La présente invention concerne un procédé pour la solidarisation d'un élément (par exemple une bride, un manchon, une allonge tubulaire, un bâti, etc...) à l'extrémité d'un tube de matériau composite et le dispositif ainsi obtenu. Par "matériau composite", on désigne une matière constituée de fibres résistantes (verre, carbone, aramide, bore, etc...) disposées de façon organisée suivant des directions préférentielles et enrobées dans une résine ou un élastomère polymérisé. Un tel procédé ou dispositif est décrit dans le document EP-A-46 896 révélant les caractéristique du préambule des revendications indépendantes 1 et 4.

On sait que les tubes de matériau composite présentent, malgré leur faible poids, des caractéristiques mécaniques élevées, de sorte qu'ils sont de plus en plus utilisés en mécanique, par exemple comme tube de torsion ou comme arbre de transmission de puissance.

Cependant, leur liaison ou leur encastrement à d'autres éléments soulève des difficultés, notamment dans la transmission des efforts.

La présente invention a pour objet de remédier à cet inconvénient et de permettre la réalisation d'une liaison de grande résistance mécanique entre un tube de matériau composite et un élément extérieur, qui peut ou non être réalisé en matériau composite. Elle permet donc d'étendre le domaine d'utilisation de tels tubes.

A cette fin, selon l'invention, le procédé pour la solidarisation d'un élément à l'extrémité d'un tube de matériau composite destiné à travailler en torsion et présentant, au moins à cette extrémité, une section annulaire, ledit élément comportant un évidement délimité entre deux parois cylindriques coaxiales espacées, la section annulaire dudit évidement correspondant à celle de ladite extrémité, de façon à ce que celle-ci puisse être emmanchée avec jeu dans ledit évidement, est caractérisé en ce qu'un manchon intercalaire, constitué d'un tronçon de gaine tressée en fibres à haute résistance enrobées de résine polymérisable, est inséré entre les parois dudit évidement et les faces interne et externe de l'extrémité dudit tube, ledit manchon étant solidarisé avec lesdites parois et lesdites faces pour assurer la liaison entre ledit tube et ledit élément, tandis que l'épaisseur et l'orientation des fibres dudit manchon intercalaire sont ajustées pour régler la progressivité de la déformée angulaire de torsion tout le long de l'encastrement de ladite extrémité dans ledit élément.

Ainsi, grâce à l'emmanchement ainsi réalisé, les efforts entre ledit tube et ledit élément passent simultanément et progressivement par les deux faces (face intérieure et face extérieure) du tube, de sorte que 1' on obtient de façon simple une liaison de grande résistance mécanique, homogène avec la capacité importante de transmission d'un couple de torsion par le tube.

Pour accroître encore la capacité de cette liaison et lui donner un caractère redondant, nécessaire dans certaines applications, en particulier sur les arbres de transmission utilisés en aéronautique, il est avantageux que les contours intérieur et extérieur de la section annulaire de l'extrémité du tube soient conformés en lignes polygonales et que l'évidement ménagé dans l'élément comporte deux parois prismatiques coaxiales, espacées, la section annulaire dudit évidement correspondant à celle de ladite extrémité, de façon à ce que celle-ci, munie de son manchon intercalaire, puisse être emmanchée dans ledit élément.

Ainsi, grâce à l'emmanchement à interférence de formes ainsi réalisé sur les deux faces de formes polygonales de l'extrémité du tube, on obtient, pour transmettre un couple de torsion élevé, une liaison de sécurité sur laquelle la solidarisation des éléments est réalisée à la fois par adhérisation des parois et par coincement mécanique des éléments mâles et femelles.

Afin de faciliter la réalisation de l'assemblage selon l'invention, il est avantageux que ledit élément soit réalisé en deux pièces solidarisables, dont l'une comporte la paroi extérieure et l'autre la paroi intérieure délimitant ledit évidement, cette solidarisation pouvant être faite par emmanchement à force de deux pièces constituées ou bien être obtenue par un moyen de collage.

La présente invention concerne de plus un dispositif comportant au moins un tube en matériau composite destiné à travailler en torsion et au moins un élément solidarisé à l'extrémité dudit tube, ledit tube présentant, au moins à cette extrémité, une section annulaire, ledit élément comportant un évidement délimité entre deux parois cylindriques coaxiales espacées, la section annulaire dudit évidement correspondant à celle de ladite extrémité, de façonàce que celle-ci puisse être emmanchée avec jeu dans ledit évidement, ce dispositif étant caractérisé en ce qu'il comporte un manchon intercalaire, constitué d'un tronçon de gaine tressée en fibres à haute résistance enrobées de résine polymérisable et disposé entre les parois dudit évidement et les faces interne et externe de l'extrémité dudit tube, ledit manchon étant solidarisé avec lesdites parois et lesdites faces pour assurer la liaison entre ledit tube et ledit élément, tandis que l'épaisseur et l'orientation des fibres dudit manchon intercalaire sont prévues pour régler la progressivité de la déformée angulaire de torsion tout le long de l'encastrement de ladite extrémité dans ledit élément.

Un tel dispositif conforme à la présente invention peut être utilisé dans de nombreuses applications. Par exemple, il peut constituer un tube de torsion pour suspension de véhicule ou un arbre de transmission de puissance. Ledit élément est alors généralement une bride et il peut être prévu un tel élément à chacune des extrémités dudit tube.

Les figures du dessin annexé feront bien comprendre comment l'invention peut être réalisée. Sur ces figures, des références identiques désignent des éléments semblables.

La figure 1 montre, en coupe axiale, un assemblage selon l'invention.

La figure 2 est une coupe radiale, selon la ligne II-II de la figure 1, de l'assemblage montré par cette figure 1.

La figure 3 montre schématiquement, en coupe axiale, un autre assemblage selon l'invention en liaison avec la figure 4 qui illustre la variation de l'angle de torsion le long de l'encastrement et le long du tube dudit assemblage.

La figure 5 montre un tube de torsion pour suspension de véhicule réalisé selon l'invention.

Les figures 6 et 7 illustrent la mise en place du manchon intercalaire de transmission d'efforts.

La figure 8 montre schématiquement une variante de réalisation de l'assemblage selon l'invention.

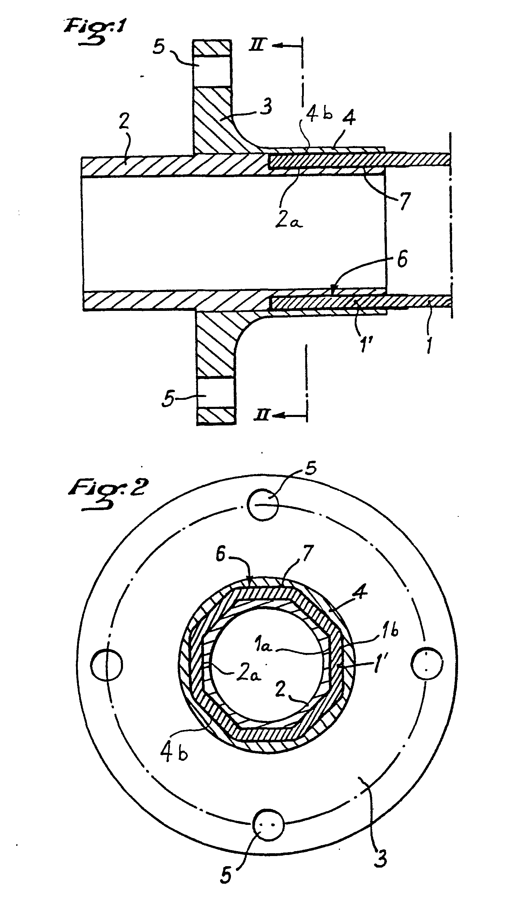

L'assemblage selon l'invention, montré par les figures 1 et 2, comporte un tube 1 de matériau composite et une bride devant être solidarisée de l'extrêmité 1' dudit tube.

Comme on peut le voir sur la figure 2, le tube 1, ou au moins son extrêmité 1', présente une section annulaire dont les contours intérieur 1a et extérieur 1b sont, dans l'exemple représenté, constitués chacun d'une ligne octogonale.

Ladite bride se compose d'un moyeu 2 et d'un disque 3 prolongé par une partie tubulaire 4, coaxiale et extérieure au moyeu 2.

Le disque 3 est pourvu de trous 5 pour des moyens d'assemblage une autre bride non représentée.

Entre le moyeu 2 et la partie tubulaire 4 est ménagé un évidement 6, délimité entre une paroi prismatique intérieure 2a prévue sur la surface extérieure dudit moyeu et une paroi prismatique extérieure 4b prévue sur la surface intérieure de ladite partie tubulaire 4. Les parois prismatiques 2a et 4b sont coaxiales et disposées de façon que la section annulaire dudit évidement 6 corresponde à la section annulaire de l'extrêmité 1' du tube 1 et ménage un certain jeu par rapport à celle-ci.

Dans cet espace ménagé entre les faces intérieures et extérieures de l'extrêmité du tube 1 et de l'évidement 6 dans la bride 2, 3 est disposé un manchon intercalaire 7, adhérisé auxdites faces intérieures et extérieures, d'une part, de l'extrêmité 1' du tube 1 et, d'autre part, de l'évidement 6 dans la bride 2, 3. Ce manchon intercalaire, destiné à assurer une progressivité de la transmission mutuelle des efforts entre la bride 2, 3 et le tube 1, est constitué d'un tronçon de gaine tressée en fibres résistantes enrobées de résine ou d'élastomère polymérisable, cette résine assurant après polymérisation la liaison avec la bride 2, 3 et le tube 1. L'épaisseur et l'orientation des fibres du manchon intercalaire 7 sont ajustées pour régler la progressivité de la déformée angulaire de torsion tout le long de l'encastrement.

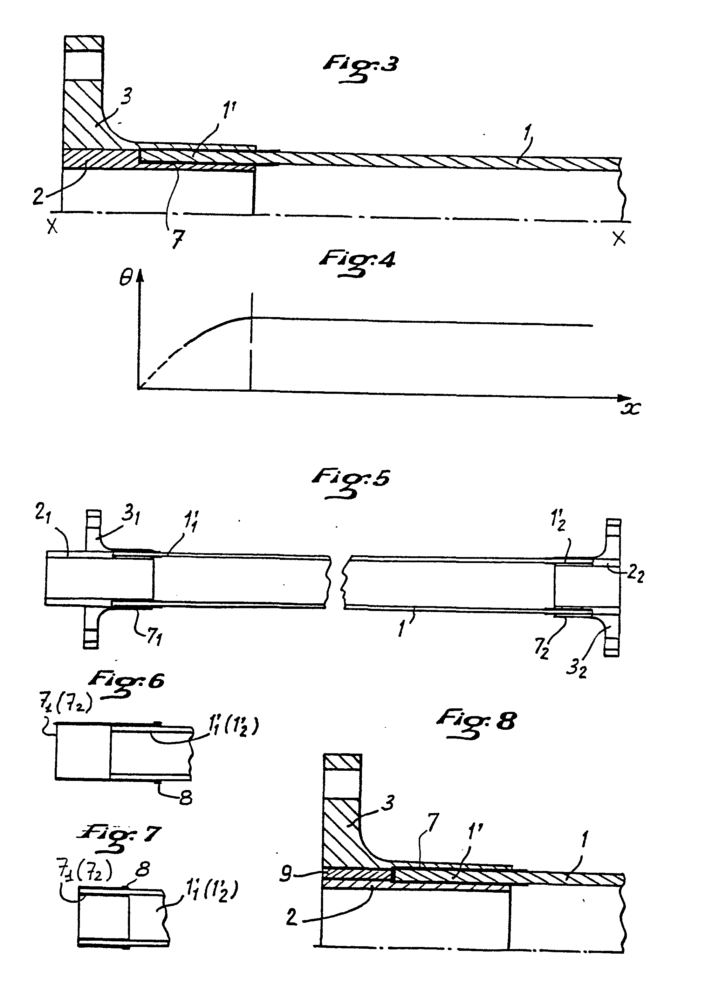

Les figures 3 et 4 illustrent l'évolution de l'angle de torsion $\theta$, qui est constant en fonction de l'abscisse x le long de l'axe X-X de l'assemblage, et varie progressivement le long de l'encastrement de l'extrêmité 1' dans la bride 2, 3. Une telle progressivité dans l'introduction des efforts permet de limiter les surcontraintes dues aux variations brutales de déformées à l'encastrement.

Sur la figure 5, on a représenté un tube de torsion ou arbre de transmission de puissance selon l'invention, comportant un tube 1 de matériau composite pourvu de brides $2_1$, $3_1$ et $2_2$, $3_2$ à ses deux extrêmités $1'_1$ et $1'_2$, de section polygonale (comme sur la figure 2).

Pour obtenir le tube de torsion ou l'arbre de transmission de puissance de la figure 5, on commence par mettre en place, sur la paroi extérieure polygonale des deux extrémités libres du tube 1, un manchon $7_1$ ou $7_2$ de fibres résistantes, ayant la structure d'une tresse. Chaque manchon $7_1$ et $7_2$ est bloqué sur l'extrêmité $1'_1$ ou $1'_2$ correspondante au moyen d'un collier de blocage 8, de manière à prolonger vers l'extérieur lesdites extrémités (voir la figure 6). Ensuite, chaque manchon $7_1$ et $7_2$ est imprégné de résine polymérisable et la partie desdits manchons saillant vers l'extérieur est rabattue à l'intérieur de l'extrêmité $1'_1$ et $1'_2$ correspondante (voir la figure 7).

On emmanche alors les moyeux $2_1$ et $2_2$ des brides dans lesdites extrêmités $1'_1$ et $1'_2$, de sorte que les fibres résistantes constituant les manchons $7_1$ et $7_2$ se tendent et que l'excédent de résine imprègnant ceux-ci est chassé.

On ôte alors les colliers de serrage 8 et on enduit de résine les surfaces des pièces $2_1$, $3_1$ et $2_2$, $3_2$ destinées à venir en contact. Ensuite les disques $3_1$ et $3_2$ sont respectivement emmanchées sur les moyeux $2_1$ et $2_2$. On élimine l'excédent de résine et on polymérise l'ensemble.

On comprendra aisément que la réalisation des brides en deux parties (moyeux 2, $2_1$, $2_2$ et disques 3, $3_1$, $3_2$) facilite, d'une part, la formation des surfaces prismatiques 2a et 4b, et, d'autre part, l'assemblage desdites brides sur les extrêmités du tube 1. Dans le cas où les brides sont constituées de matériau composite, elles peuvent être réalisées par enroulement et moulage. Il en est de même du tube 1 et de ses extrêmités à section polygonale.

Dans les modes de réalisation des figures 1, 3 et 5, les parois prismatiques 2a et 4b ne s'étendent axialement que sur une partie des moyeux 2, $2_1$, $2_2$ ou des parties tubulaires 4, respectivement. Pour faciliter encore la réalisation des pièces 2 et 3-4, il peut être avantageux, comme illustré sur la figure 8, que lesdites parois prismatiques 2a et 4b s'étendent axialement sur la totalité desdites pièces. On prévoit alors une bague 9 pour boucher la partie de l'évidement 6, non obturée par l'extrêmité 1' correspondante.

**Revendications**

1. Procédé pour la solidarisation d'un élément (2, 3) à l'extrémité (1') d'un tube (1) de matériau composite destiné à travailler en torsion et présentant, au moins à cette extrémité (1'), une section annulaire, ledit élément (2, 3) comportant un évidement (6) délimité entre deux parois cylindriques coaxiales espacées (2a, 4b), la section annulaire dudit évidement (6) correspondant à celle de ladite extrémité, de façon à ce que celle-ci puisse être emmanchée avec jeu dans ledit évidement (6), caractérisé en ce qu'un manchon intercalaire (7), constitué d'un tronçon de gaine tressée en fibres à haute résistance enrobées de résine polymérisable, est inséré entre les parois dudit évidement (6) et les faces interne et externe de l'extrémité (1') dudit tube (1), ledit manchon étant solidarisé avec lesdites parois et lesdites faces pour assurer la liaison entre ledit tube (1) et ledit élément (2, 3), tandis que l'épaisseur et l'orientation des fibres dudit manchon intercalaire (7) sont ajustées pour régler la progressivité de la déformée angulaire de torsion tout le long de l'encastrement de ladite extrémité (1') dans ledit élément (2, 3).

2. Procédé selon la revendication 1, caractérisé en ce que les contours intérieur et extérieur de la section annulaire de l'extrémité (1') du tube (1) sont conformés en lignes polygonales et en ce que l'évidement (6) ménagé dans l'élément (2, 3) comporte deux parois prismatiques coaxiales, espacées, la section annulaire dudit évidement correspondant à celle de ladite extrémité, de façon à ce que celle-ci, munie de son manchon intercalaire, puisse être emmanchée dans ledit élément.

3. Procédé selon l'une quelconque des revendications 1 ou 2, caractérisé en ce que ledit élément (2, 3) est réalisé en deux pièces solidarisables dont l'une (3) comporte la paroi extérieure (4b) et l'autre (2) la paroi intérieure (2a), délimitant ledit évidement (6).

4. Dispositif comportant au moins un tube (1) en matériau composite destiné à travailler en torsion et au moins un élément (2, 3) solidarisé à l'extrémité (1') dudit tube (1), ledit tube présentant, au moins à cette extrémité (1'), une section annulaire, ledit élément (2, 3) comportant un évidement (6) délimité entre deux parois cylindriques coaxiales espacées (2a, 4b), la section annulaire dudit évidement (6) correspondant à celle de ladite extrémité, de façon à ce que celle-ci puisse être emmanchée avec jeu dans ledit évidement (6), caractérisé en ce qu'il comporte un manchon intercalaire (7), constitué d'un tronçon de gaine tressée en fibres à haute résistance enrobées de résine polymérisable et disposé entre les parois dudit évidement (6) et les faces interne et externe de l'extrémité (1') dudit tube (1), ledit manchon étant solidarisé avec lesdites parois et lesdites faces pour assurer la liaison entre ledit tube (1) et ledit élément (2, 3), tandis que l'épaisseur et l'orientation des fibres dudit manchon intercalaire (7) sont prévues pour régler la progressivité de la déformée angulaire de torsion tout le long de l'encastrement de ladite extrémité (1') dans ledit élément (2, 3).

5. Dispositif selon la revendication 4, caractérisé en ce que ledit élément (2, 3) est une bride.

6. Dispositif selon l'une des revendications 4 ou 5, caractérisé en ce que ledit tube (1) comporte un tel élément (2, 3) à chacune de ses extrémités.

7. Dispositif selon l'une quelconque des revendications 4 à 6, caractérisé en ce qu'il constitue un tube de torsion pour suspension de véhicule.

8. Dispositif selon l'une quelconque des revendications 4 à 6, caractérisé en ce qu'il constitue un arbre de transmission de puissance.

**Patentansprüche**

1. Verfahren zum Befestigen eines Endstückes (2, 3) am Ende (1') eines zur Beanspruchung auf Torsion bestimmten Rohres (1) aus Verbundstoff, das zumindest an diesem Ende (1') einen Ringquerschnitt aufweist, wobei das Endstück (2, 3) eine zwischen zwei zylindrischen, koaxial getrennt angeordneten Wänden (2a, 4b) abgegrenzt liegende Ausnehmung (6) besitzt und wobei der Ringquerschnitt der Ausnehmung (6) dem des Endes dergestalt entspricht, daß es mit Spiel in der Ausnehmung (6) angeschäftet werden kann, dadurch gekennzeichnet, daß eine Zwischenhülse (7) gebildet aus einem Hüllrohr-Endstück aus hochwiderstandsfähigen, von polymerisierbarem Harz ummantelten Fasern zwischen den Wänden der Ausnehmung (6) sowie den Innen- und Außenflächen des Endes (1') des Rohres (1) eingefügt wird und daß die Hülse an den Wänden sowie an den Flächen zur Sicherung der Verbindung zwischen dem Rohr (1) und dem Endstück (2, 3) befestigt ist, während die Dicke und Ausrichtung der Fasern der Zwischenhülse (7) eingestellt sind, das Fortschreiten der Torsion-Winkelbiegungslinie auf der gesamten Länge der Einspannung des Endes (1') im Endstück (2, 3) zu regeln.

2. Verfahren nach Anspruch 1, dadurch gekennzeichnet, daß die Innen- und Außenkonturen des Ringquerschnittes des Endes (1') des Rohres (1) als polygonale Linien gestaltet sind und daß die im Endstück (2, 3) ausgesparte Ausnehmung (6) zwei getrennt angeordnete, prismatische koaxiale Wände aufweist, wobei der Ringquerschnitt der Ausnehmung dem des Endes dergestalt entspricht, daß es mit der Zwischenhülse bestückt im Endstück angeschäftet werden kann.

3. Verfahren nach einem der vorhergehenden Ansprüche 1 oder 2, dadurch gekennzeichnet, daß das Endstück (2, 3) geschaffen ist aus zwei befestigbaren Stücken, von denen das eine (3) die Außenwand (4b) und das andere (2) die die Ausnehmung (6) begrenzende Innenwand (2a) aufweist.

4. Vorrichtung bestehend zumindest aus einem zur 8eanspruchung auf Torsion bestimmten Rohr (1) aus Verbundstoff und zumindest aus einem am Ende (1') des Rohres (1) befestigten Endstükkes (2, 3), wobei das Rohr zumindest an diesem Ende (1') einen Ringquerschnitt aufweist, das Endstück (2, 3) eine zwischen zwei zylindrischen, koxial getrennt angeordneten Wänden (2a, 4b) abgegrenzt liegende Ausnehmung (6) besitzt und wobei der Ringquerschnitt der Ausnehmung (6) dem des Endes dergestalt entspricht, daß es mit Spiel in der Ausnehmung (6) angeschäftet werden kann, dadurch gekennzeichnet,

daß sie eine aus einem Hüllrohr-Endstück aus hochwiderstandsfähigen, von polymerisierbarem Harz ummantelten Faser gebildete Zwischenhülse (7) aufweist, die zwischen den Wänden der Ausnehmung (6) sowie den Innen- und Außenflächen des Endes (1') des Rohres (1) angeordnet ist und die an den Wänden sowie an den Flächen zur Sicherung der Verbindung zwischen dem Rohr (1) und dem Entstück (2, 3) befestigt ist, während die Dicke und Ausrichtung der Fasern der Zwischenhülse (7) vorgesehen sind, das Fortschreiten der Torsion-Winkelbiegungslinie auf der gesamten Länge der Einspannung des Endes (1') im Endstück (2, 3) zu regeln.

5. Vorrichtung nach Anspruch 4, dadurch gekennzeichnet, daß das Endstück ein Flansch ist.

6. Vorrichtung nach einem der vorhergehenden Ansprüche 4 oder 5, dadurch gekennzeichnet, daß das Rohr (1) an jedem seiner Enden ein derartiges Endstück (2, 3) aufweist.

7. Vorrichtung nach einem der vorhergehenden Ansprüche 4 bis 6, dadurch gekennzeichnet, daß sie als Drehstab für die Fahrzeugaufhängung ausgebildet ist.

8. Vorrichtung nach einem der vorhergehenden Ansprüche 4 bis 6, dadurch gekennzeichnet, daß sie als Kraftübertragungswelle ausgebildet ist.

**Claims**

1. Process for connecting an element (2, 3) to the end (1') of a tube (1) of composite material, intended to undergo torsional stress and presenting, at least at this end (1'), an annular cross-section, said element (2, 3) comprising a recess (6) defined between two spaced apart coaxial cylindrical walls (2a, 4b), the annular section of said recess (6) corresponding to that of said end, so that the latter may be fitted with clearance in said recess (6), characterized in that an intercalated sleeve (7) constituted by a section of braided sleeving of high resistance fibers coated with polymerizable resin is inserted between the walls of said recess (6) and the inner and outer faces of the end (1') of said tube (1), said sleeve being connected with said walls and said faces in order to ensure connection between said tube (1) and said element (2, 3), whereas the thickness and the orientation of the fibres of said intercalated sleeve (7) are such as to adjust the progressivity of the torsional angular deformation curve all along the embedding of said end (1') in said element (2, 3).

2. Process according to claim 1, characterized in that the inner and outer contours of the annular cross-section of the end (1') of the tube (1) are shaped as polygonal lines and in that the recess (6) formed in the element (2, 3) comprises two spaced apart coaxial prismatic walls, the annular cross-section of said recess corresponding to that of said end, so that the latter, provided with its intercalated sleeve, may be fitted in said element.

3. Process according to any one of claims 1 or 2, characterized in that said element (2, 3) is made in two connectable parts of which one (3) comprises the outer wall (4b) and the other (2) the inner wall (2a) defining said recess (6).

4. Device comprising at least one tube (1) of composite material, intended to undergo torsional stress and at least one element (2, 3) connected to the end (1') of said tube (1), said tube presenting, at least at this end (1'), an annular cross-section, said element (2, 3) comprising a recess (6) defined between two spaced apart coaxial cylindrical walls (2a, 4b), the annular section of said recess (6) corresponding to that of said end, so that the latter may be fitted with clearance in said recess (6), characterized in that it comprises an intercalated sleeve (7) constituted by a section of braided sleeving of high resistance fibers coated with polymerizable resin and inserted between the walls of said recess (6) and the inner and outer faces of the end (1') of said tube (1), said sleeve being connected with said walls and said faces in order to ensure connection between said tube (1) and said element (2, 3), whereas the thickness and the orientation of the fibres of said intercalated sleeve (7) are such as to adjust the progressivity of the torsional angular deformation curve all along the embedding of said end (1') in said element (2, 3).

5. Device according to claim 4, characterized in that said element (2, 3) is a flange.

6. Device according to one of claims 4 or 5, characterized in that said tube (1) comprises such an element (2, 3) at each of its ends.

7. Device according to any one of claims 4 to 6, characterized in that it constitutes a torque tube for vehicle suspension.

8. Device according to any one of claims 4 to 6, characterized in that it constitutes a power transmission shaft.

Fig. 1

Fig. 2

Fig:3

Fig:4

Fig:5

Fig:6

Fig:8

Fig:7